# EUROPEAN PATENT APPLICATION

(11) **EP 1 510 531 A1**
(43) Date of publication of application: **02.03.2005**
(21) Application number: 03728119.3
(22) Date of filing: 20.05.2003
(51) Int. Cl.: C08F 8/12, C08F 226/02

(54) **AMINE-FUNCTIONAL COPOLYMER AND PROCESS FOR PRODUCING THE SAME**

(30) Priority: 31.05.2002 JP 2002159312; 16.04.2003 JP 2003111506
(71) Applicant: Mitsubishi Chemical Corporation, Tokyo 108-0014 (JP)
(72) Inventor: ITOU, Yasuhiro,c/o Mitsubishi Chemical Corporation, Yokkaichi-shi, Mie 510-0848 (JP); AOYAMA, Masato,c/o Mitsubishi Chemical Corporation, Yokkaichi-shi, Mie 510-0848 (JP); SAWA, Kouhei,c/o Mitsubishi Chemical Corporation, Yokkaichi-shi, Mie 510-0848 (JP)
(74) Representative: HOFFMANN - EITLE
(86) International application number: PCT/JP2003/006269
(87) International publication number: WO 2003/102036

(57) **Abstract**

An amine-functional copolymer improved in color and odor, and a method for efficiently producing the amine-functional copolymer in the form of a powder by efficiently hydrolyzing a vinyl alcohol/N-vinyl carboxamide, are provided. The amine-functional copolymer, of which a 10 wt% aqueous solution has a Gardner index of at most 3 as measured in accordance with ASTM D1544. Such a copolymer is obtainable by a method for producing an amine functional copolymer by hydrolyzing N-vinyl carboxamide copolymer in the presence of an acid or base catalyst, wherein the hydrolysis is carried out in an aqueous medium having a salt dissolved therein.

## Description

### TECHNICAL FIELD

The present invention relates to an amine-functional copolymer improved in color and odor, which is useful for various applications such as a flocculating agent for dispersed substances in water, a flocculating agent or fortifier for paper making, a cosmetic material, a gas barrier material, an emulsifying agent, a colloid protective agent, a soil conditioner, or an adhesive, and a method for its production. Particularly, it relates to a copolymer comprising a vinyl alcohol unit and a vinyl amine unit, improved in color and odor, and a method for its production.

### BACKGROUND ART

An amine-functional copolymer has been used for various applications such as a flocculating agent for dispersed substances in water, a flocculating agent or fortifier for paper making, a cosmetic material, a gas barrier material, an emulsifying agent, a colloid protective agent, a soil conditioner, or an adhesive. Particularly, in its application to a cosmetic material, a gas barrier material or a coating agent for an inkjet photo paper, it is desired to have little odor or coloration.

In the case of a cosmetic material, coloration of the copolymer to be blended is undesirable, since the appearance of the blended cosmetic deteriorates, and a desired color cannot be obtained when the cosmetic is to be colored. Further, in a case where it is desired to aromatize the material, an odor of the copolymer to be blended is undesirable since a masking reagent may further be required, or a desired aroma may not be obtained. A gas barrier material is often used for an application where the content is expected to be seen therethrough. In such a case, coloration of the copolymer to be blended is undesirable and it is undesirable, that the copolymer forming a gas barrier material itself has an odor. Further, also for a coating agent for an inkjet photo paper, coloration of the copolymer to be blended is undesirable when it is required to express the color of a printed object faithfully, and an odor of the copolymer to be blended is undesirable during working stages of preparing, coating and drying of the coating agent.

However, amine-functional copolymers which have been provided up to now have had yellow coloration or a dusty odor, or both faults. Thus, it has been desired to provide a copolymer which is improved in color and odor.

Usually, an amine-functional copolymer is produced by copolymerizing an N-vinyl carboxamide such as N-vinyl acetamide or N-vinyl formamide with a monomer copolymerizable therewith, and then hydrolyzing amide groups in the obtained copolymer to amino groups.

Particularly, a vinyl alcohol/vinyl amine copolymer is produced by copolymerizing a vinyl carboxylate such as vinyl acetate and an N-vinyl carboxamide such as N-vinyl formamide, then hydrolyzing ester groups originated from the vinyl carboxylate in the obtained vinyl carboxylate/N-vinyl carboxyamide copolymer (hereinafter, hydrolyzing such ester groups is referred to as saponification) to obtain a vinyl alcohol/N-vinyl carboxamide copolymer, and then hydrolyzing amide groups originated from a vinyl amide of this copolymer.

JP-A-62-74902 discloses a method of saponifying a vinyl acetate/vinyl formamide copolymer in an aqueous solution with an acid to obtain a vinyl alcohol/vinyl amine copolymer in the form of an aqueous solution of a salt compound neutralized by an acid. However, in this method, some steps such as neutralization, demineralization, precipitation and separation are required to obtain the vinyl alcohol/vinyl amine copolymer in a powder form from the aqueous solution, and it has been rather difficult to obtain the vinyl alcohol/vinyl amine copolymer itself. Thus, the characteristics of the copolymer have not been clearly understood.

A method of obtaining a vinyl alcohol/vinyl amine copolymer by hydrolyzing a vinyl alcohol/vinyl formamide copolymer in methanol or in a solvent mixture of isopropanol and water is disclosed in JP-B-6-51741 or JP-A-2001-329020, respectively. When a vinyl alcohol/vinyl formamide is hydrolyzed in a solvent which does not substantially dissolve a vinyl alcohol/vinyl amine copolymer, such as methanol or isopropanol, it is possible to obtain a powdery vinyl alcohol/vinyl amine copolymer simply by filtration of the reaction mixture. However, this method has problems such that the production cost will be high since a large amount of an organic solvent is required, and the production process will be complicated as an organic solvent is used. Further, by the method disclosed in JP-B-6-51741, only a copolymer having both coloration and odor is obtainable. By the method disclosed in JP-A-2000-219706, an odor may be reduced, but there is a drawback that coloration tends to be distinct.

JP-A-2000-219706 discloses a method of obtaining a vinyl alcohol/vinyl amine copolymer in the form of a powder by suspending a vinyl acetate/vinyl formamide copolymer in water, converting it to a vinyl alcohol/vinyl amine copolymer by hydrolysis under a basic condition in one step, followed by washing with at least one member selected from water, an alcohol and saline water of at most 20°C. This method is superior in that it is capable of obtaining a vinyl alcohol/vinyl amine copolymer in the form of a powder, but further improvements are desired with respect to the color and odor and with respect to the yield.

It is an object of the present invention to provide an amine-functional copolymer which has coloration and odor reduced and to provide a method of obtaining the amine-functional copolymer in the form of a powder by efficiently hydrolyzing an N-vinyl carboxamide copolymer.

### DISCLOSURE OF THE INVENTION

As a result of extensive studies made on conditions for hydrolyzing an N-vinyl carboxamide copolymer, the present inventors have found that by hydrolyzing this copolymer in the presence of an acid or base catalyst in an aqueous medium having a salt dissolved therein, the corresponding vinyl amine copolymer can be obtained quickly in good yield and yet by a simple operation and further, the polymer thus obtained has coloration and odor reduced, and they have thus accomplished the present invention.

Namely, the present invention provides the followings.
(1) A copolymer which is an amine-functional copolymer, characterized in that its 10 wt% aqueous solution has a Gardener index of at most 3 as measured in accordance with ASTM D1544.
(2) A copolymer which is an amine-functional copolymer, characterized in that the amount of acetaldehyde in a sample of head space gas collected from its 10 wt% aqueous solution by a solid phase micro extraction method at 60°C for 120 minutes in an air atmosphere, is less than 2µg/mL.
(3) The copolymer according to (1) or (2), wherein the amine-functional copolymer is a vinyl alcohol/vinyl amine copolymer comprising repeating units represented by the formulae (I) and (II): 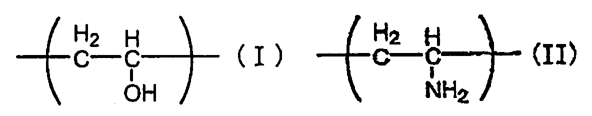
(4) The copolymer according to (3), wherein the content ratio of the vinyl alcohol unit (I) to the vinyl amine unit (II) in the vinyl alcohol/vinyl amine copolymer is (I):(II)=99:1 to 50:50 (mol ratio).
(5) A method for producing an amine-functional copolymer, which comprises hydrolyzing N-vinylcarboxamide copolymer in the presence of an acid or base catalyst, characterized in that the hydrolysis is carried out in an aqueous medium having a salt dissolved therein.
(6) A method for producing the copolymer as defined in any one of (1) to (4), which comprises hydrolyzing N-vinylcarboxamide copolymer in an aqueous medium having a salt dissolved therein, in the presence of an acid or base catalyst.
(7) The method for producing the copolymer according to (5) or (6), wherein the N-vinylcarboxamide copolymer is a vinyl alcohol/N-vinylcarboxamide copolymer comprising repeating units represented by the formulae (I) and (III): 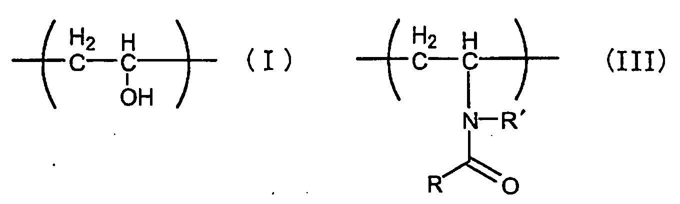 (In the formula (III), each of R and R' independently represents a hydrogen atom, an alkyl group or an aryl group.)
(8) The method for producing the copolymer according to any one of (5) to (7), wherein the hydrolysis is carried out under such a condition that the formed amine-functional copolymer precipitates as solid.
(9) The method for producing the copolymer according to (7) or (8), wherein the vinyl alcohol/N-vinylcarboxamide copolymer is one obtained by hydrolyzing a vinyl carboxylate/N-vinylcarboxamide copolymer in an organic solvent.
(10) The method for producing the copolymer according to any one of (5) to (9), wherein the cation of the salt is an alkali metal ion.
(11) The method for producing the copolymer according to any one of (5) to (10), wherein the salt is one selected from the group consisting of sodium chloride, potassium chloride, sodium formate, potassium formate, sodium acetate and potassium acetate.
(12) The method for producing the copolymer according to any one of (5) to (11), wherein the concentration of the salt in the aqueous medium is at least 1 wt%.
(13) The method for producing the copolymer according to any one of (5) to (12), wherein the aqueous medium having a salt dissolved therein is a solution obtained after solid-liquid extraction of the amine-functional copolymer precipitated from the reaction mixture.
(14) A cosmetic material comprising the copolymer as defined in any one of (1) to (4).
(15) A gas barrier material comprising the copolymer as defined in any one of (1) to (4).
(16) A coating agent for an inkjet photo paper comprising the copolymer as defined in any one of (1) to (4).

### BEST MODE FOR CARRYING OUT THE INVENTION

Now, the present invention will be described in further detail, taking as an example a vinyl alcohol/vinyl amine copolymer, with respect to the characteristics of the method for its production and the obtained high quality copolymer.

In the method for the production of the present invention, as the vinyl alcohol/N-vinylcarboxamide copolymer to be used as the starting material, a copolymer comprising repeating units represented by the formulae (I) and (III) is employed. 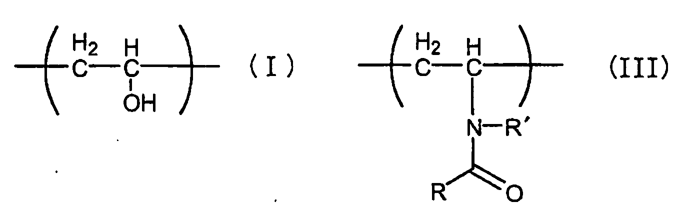 (in the formula (III), each of Rand R' which are independent of each another, represents a hydrogen atom, an alkyl group or an aryl group.)

As R, a hydrogen atom or a methyl group is preferred, and a hydrogen atom is particularly preferred.

As R', a hydrogen atom is preferred.

Such a vinyl alcohol/N-vinylcarboxamide copolymer can be obtained, as well known, by copolymerizing a vinyl carboxylate such as vinyl formate, vinyl acetate, vinyl propionate, vinyl butyrate, vinyl benzoate or vinyl trifluoroacetate and an N-vinylcarboxamide such as N-vinyl formamide or N-vinyl acetamide, followed by saponifying, in an usual manner, ester groups originated from a vinyl carboxylate of the obtained vinyl carboxylate/N-vinylcarboxamide copolymer. Further, at the time of the copolymerization of the vinyl carboxylate ester with the N-vinyl carboxamide, another monomer copolymerizable with them may be copolymerized. Such a monomer may, for example, be an acrylic acid derivative such as acrylic acid, an acrylic ester, acrylonitrile or acrylamide; an N-vinyl lactam such as N-vinyl pyrrolidone; or an alkyl vinyl ether such as methyl vinyl ether, ethyl vinyl ether, n-propyl vinyl ether, n-butyl vinyl ether, isopropyl vinyl ether, t-butyl vinyl ether or isobutyl vinyl ether.

The copolymerization reaction can be carried out without a solvent. However, it is preferably carried out in the presence of a solvent from the viewpoint of removing heat of reaction, simple aftertreatment or the like. Such a solvent may, for example, be an alcohol such as methanol, ethanol or isopropanol; or a ketone such as acetone or methyl ethyl ketone. The method of polymerization may be solution polymerization, emulsion polymerization or suspension polymerization.

As a polymerization initiator, one selected from the group consisting of an azo compound such as 2,2'-azobisisobutylonitrile, 2,2'-azobis(2,4-dimethyl valero nitrile); a peroxide such as t-butyl peroxypivalate, t-butyl peroxyneodecanoate or di(2-ethylhexyl) peroxycarbonate; and a redox catalyst having such a compound combined with a reducing agent such as ascorbic acid or potassium sulfite, is preferred. The amount of the polymerization initiator to be used is usually preferably from 0.01 to 10 wt% based on the monomers. Further, if necessary, a chain transfer agent, etc. may be added. The polymerization reaction is preferably carried out from 25 to 150°C.

The formed vinyl carboxylate/N-vinylcarboxamide copolymer is dissolved or suspended in a suitable solvent, followed by saponification of ester groups originated from the vinyl ester in a usual manner in the presence of a base catalyst to obtain a vinyl alcohol/N-vinylcarboxamide copolymer comprising repeating units represented by the formulae (I) and (III).

The vinyl carboxylate/N-vinylcarboxamide copolymer to be saponified comprises repeating units represented by the formula (IV) and the formula (III) in a mol ratio of (IV):(III) being preferably from 99:1 to 50:50, particularly preferably from 95:5 to 50:50. If the proportion of the repeating unit of the formula (III) is high, a vinyl alcohol/N-vinyl amine copolymer formed after hydrolysis of the vinyl alcohol/N-vinylcarboxamide copolymer tends to hardly precipitate.

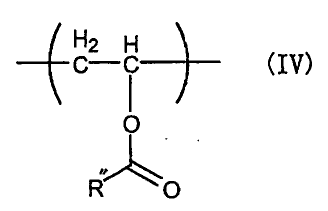

In the formula (IV), R" represents a hydrogen atom, an alkyl group or an aryl group.

A solvent which is used for the saponification is not particularly restricted. It may for example, be water; an alcohol such as methanol, ethanol or isopropanol; or a cyclic ether such as tetrahydrofuran or dioxane.

Further, in this case, if such a solvent that a polymer precipitates as the copolymer is saponified, is selected for use, operations to precipitate and to isolate the product after the reaction can be omitted and the process can be simplified. As such a solvent, methanol, ethanol, isopropanol and tetrahydrofuran may be mentioned.

As a base catalyst to be used for the saponification, an alkyl amine such as trimethyl amine or triethyl amine; or an alkali metal hydroxide such as sodium hydroxide or potassium hydroxide, may, for example, be mentioned. The amount of the catalyst to be used is preferably within a range of from 0.1 to 3 wt% based on the vinyl carboxylate groups of the copolymer to be saponified. For example, a vinyl alcohol/N-vinylcarboxamide copolymer can be obtained by carrying out the polymerization reaction in methanol and saponifying the formed reaction mixture by adding potassium hydroxide.

The saponiofication of the above-mentioned ester groups is carried out preferably from room temperature to 100°C, particularly preferably from 30 to 70°C.

In the present invention, the vinyl alcohol/N-vinylcarboxamide copolymer obtained by such a method is hydrolyzed in an aqueous medium having a salt dissolved therein in the presence of an acid or base catalyst to obtain an amine-functional copolymer.

If the saponification of the vinyl carboxylate/N-vinylcarboxamide copolymer is carried out in an organic solvent such as methanol, the vinyl alcohol/N-vinylcarboxamide copolymer obtained from the reaction mixture usually contains a large amount of the organic solvent used for the saponification. If this is hydrolyzed by the method of the present invention as it is, the formed amine-functional copolymer may not sometimes be precipitated as solid from the reaction solution. Thus, in a case where the vinyl alcohol/N-vinylcarboxamide copolymer to be saponified contains a large amount of an organic solvent, it is preferred to remove it to bring the content of the copolymer to a level of preferably at least 85 wt%, particularly preferably at least 95 wt%, whereupon the hydrolysis is carried out.

As an aqueous medium, water is preferably employed. However, an organic solvent may be used in combination if small in amount. But, if an organic solvent is used in combination, it may hinder the precipitation of the amine-functional copolymer formed by hydrolysis.

As the catalyst, either an acid or base can be employed. However, it is preferred to employ a base. As the acid, hydrochloric acid, hydrobromic acid, nitric acid, an halogenic acid, trifluoroacetic acid or methansulfonic acid may, for example, be mentioned. As the base, an alkali metal hydroxide such as sodium hydroxide, potassium hydroxide or potassium carbonate may, for example, be mentioned.

The catalyst is preferably employed within a range of from 1 to 10 equivalents per equivalent amount of the amide groups of the vinyl alcohol/N-vinylcarboxamide copolymer.

As the salt to be dissolved in an aqueous medium, optional one may be employed as long as the hydrolytic reaction is not thereby hindered.

As a cation of the salt, an alkali metal ion such as sodium or potassium is preferred.

As an anion of the salt, a monovalent ion, such as an inorganic ion such as a chloride ion, or a carboxylate ion such as a formate ion or an acetate ion is preferred. If a salt having a divalent anion such as a sulfate ion is employed, an amine may sometimes undergo crosslinking and gelation.

As such a salt, usually, an inorganic salt such as sodium chloride or potassium chloride; or a carboxylate such as sodium formate, sodium acetate, sodium butyrate or potassium formate may, for example, be mentioned. Particularly, sodium chloride, potassium acetate, sodium acetate, potassium formate or sodium formate is preferred from the viewpoint of price, availability and efficiency in controlling the reaction.

The above-mentioned salt is added in amount of at least 1 wt% in the hydrolytic solution. The amount to be added is preferably at least 3 wt%, more preferably at least 5 wt%, most preferably at least 10 wt%. If the amount to be added is small at a level of e.g. less than 1 wt%, the obtained amine-functional copolymer tends to hardly precipitate in a solid state and the yield tends to be low, as the salt concentration tends to be too low. On the other hand, since the reaction will not be hindered by an excessive salt concentration, the salt can be added to its saturation concentration.

The hydrolytic reaction is carried out at a temperature of usually from 30 to 130°C, preferably from 50 to 100°C. Further, the reaction time is usually from 1 to 24 hours although it varies depending on the temperature and the solvent. The system of the reaction may be either a batch system or a continuous system.

The hydrolytic reaction is considered to proceed as a liquid phase reaction. Namely, it is considered to take a process such that, at first, the vinyl alcohol/N-vinyl carboxyamide copolymer as starting material is dissolved in an aqueous medium and hydrolyzed, and the formed amine-functional copolymer precipitates in a solid state from the aqueous medium. In the method of the present invention, it is considered possible to attain a high hydrolytic rate via such a reaction process.

Further, in the present invention, the hydrolytic reaction rate can be controlled by adjusting the conditions of the hydrolytic reaction, such as the temperature, the time or the amount of the catalyst. Accordingly, it is possible to obtain an amine-functional copolymer, wherein almost all of carboxylate amide groups are converted to amine-functional groups, or to obtain an amine-functional copolymer, wherein carboxyamide groups partly remain, i.e. units represented by the formula (III) are contained in the copolymer. The obtained amine-functional copolymer may be washed with a suitable solvent such as cold water or methanol to reduce the amount of the salt, etc. remaining in the copolymer or may be dried to remove the solvent, as the case requires.

The average molecular weight, as converted to Pullulan, of the above obtained amine-functional copolymer is usually from 5000 to 1000000 as measured according to the GPC measurement. Its typical composition comprises repeating units represented by the formulae (I) and (II) in a mol ratio of (I):(II) being from 99:1 to 50:50.

Further, the aqueous solution which is obtained by separating the amine-functional copolymer from the reaction mixture, contains the salt, and it can be reused for the hydrolysis of a vinyl alcohol/N-vinyl carboxyamide copolymer. In such a case, it is preferred to employ a base catalyst and employ a carboxylate formed by the hydrolysis of the vinyl alcohol/N-vinyl formamide copolymer as the starting material, as a salt to be dissolved in the aqueous medium, since the composition of the aqueous medium can be maintained to be almost constant even though it is repeatedly used. For example, in a case of hydrolyzing a vinyl alcohol/N-vinyl formamide copolymer, it is preferred to employ sodium hydroxide or potassium hydroxide as such a catalyst and employ sodium formate or potassium formate as such a salt. An amine-functional copolymer, particularly a vinyl alcohol/vinyl amine copolymer, of the present invention has coloration of its aqueous solution reduced as compared to the same copolymer which is obtained by a known method. The degree of its coloration of the 10 wt% aqueous solution is at most 3, particularly at most 2, as the Gardner Color Standard Number measured by ASTM 1544. Further, the Gardner Color Standard Number of the vinyl alcohol/vinyl amine copolymer which is obtained by the known method is at least 4.

The reason why a vinyl alcohol/vinyl amine copolymer having such reduced coloration can be obtained in the present invention, is not clearly understood. However, it is considered as follows.

Namely, as described above, a vinyl alcohol/vinyl amine copolymer is obtained by copolymerizing a vinyl carboxylate such as vinyl acetate with an N-vinyl carboxyamide such as N-vinyl formamide, saponyfying ester groups originated from the vinyl carboxylate in the obtained vinyl carboxylate/N-vinyl carboxyamide copolymer to obtain a vinyl alcohol/N-vinyl carboxyamide copolymer, and then, hydrolyzing amide groups originated from the vinyl amide of this polymer. However, usually, a severe condition using a large amount of an acid or base under reflux of a solvent, is required as the reaction condition for hydrolyzing amide groups originated from a vinyl amide. Accordingly, it is considered that coloration may be caused by oxidation of the amine groups formed during the reaction or by formation of a cyclic structure by a certain reason.

For example, as disclosed in JP-B-6-51741 and JP-A-2001-329020, if a vinyl alcohol/vinyl formamide copolymer is hydrolyzed in a solvent such as methanol or isopropanol, which does not substantially dissolve a vinyl alcohol/vinyl amine copolymer, colored substances also will not be dissolved, whereby it is considered that the colored substances will remain as entrained also in the obtained vinyl alcohol /vinyl amine copolymer. On the other hand, in the method of the present invention, a vinyl alcohol/vinyl amine copolymer precipitates as powder by an action of the salt dissolved in the aqueous medium after carrying out the hydrolysis under such a condition that a vinyl alcohol/vinyl formamide copolymer is once dissolved. Thus, it is considered that, even if a colored substance were formed, it would remain in the aqueous medium and, as a result, a vinyl alcohol/vinyl amine copolymer having reduced coloration can be obtained.

Further, the method disclosed in JP-A-2000-219706 requires a long reaction time as compared with the present invention. Accordingly, it is considered that a colored substance will be formed during such a reaction time and will precipitate together with a vinyl alcohol/vinyl amine copolymer thereby to form a colored copolymer only.

Further, the vinyl alcohol/vinyl amine copolymer of the present invention has an odor which is reduced as compared to the vinyl alcohol/vinylamine copolymer having a dusty odor which is obtained by a known method. If a gas which is obtained by collecting an odorous component from a 10 wt% aqueous solution of the copolymer by Solid Phase Micro Extraction (SPME) under the following condition, is analyzed by Head Space Gas Chromatography (HSGC), in the case of the copolymer of the present invention, the amount of acetaldehyde will be less than 2 µg/mL, particularly at most 1 µg/mL.

Further, the content of acetaldehyde was measured under the following conditions.
SPME fiber: 75 µm Carboxen/Polydimethylsiloxane,
Apparatus: MPS2, manufactured by GERSTEL, Heating
temperature: 60°C, Heating time: 120 minutes, Heating
atmosphere: air, Collecting temperature: -150°C
GC-MS apparatus: GC: HP6890MS, manufactured by Agilent: Mass Sensitive Detector 5973N (EI) column, manufactured by Agilent: HP-INNOWAX, Column temperature: 40°C × 15 min to 5°C/min to 250°C × 20 min, Injection mode: Weight of a splitless sample: 7.5 (±0.1 g) g of a test sample was weighed and put in a head space bottle of 20 ml in volume.

Further, the quantitative analysis of acetaldehyde was carried out by obtaining a relative sensitivity of GC-MS analysis (a value which is obtained by dividing the peak area of acetaldehyde obtained by total ion chromatography by the concentration of the aqueous solution of acetaldehyde) from the peak area obtained by total ion chromatography wherein an aqueous solution containing about 10 µg/ml (10 ppm; the concentration is accurately preliminarily determined from the preparation conditions) of acetaldehyde which is separately prepared, was measured under the same conditions as for the test sample, and calculating the odorous component in the sample solution by converting the amounts of the respective components which are generated from the sample to a concentration of an aqueous solution of acetaldehyde.

Further, at least 2 µg/mL of acetaldehyde is, usually, detected from the vinyl alcohol/vinyl amine copolymer which is obtained by a known method.

Generally, acetaldehyde is known as a strong odorous substance such that its threshold for detection of the odor is 0.0015 ppm (J. Air. Poll. Control Association, Vol.19, No.2, page 91, reported value by Japan Environmental Sanitation Center). However, from the general practical knowledge, it is taken for granted that the odor is practically not sensed if the concentration of acetaldehyde measured by the above-mentioned method is less than 2 µg/mL.

The reason why, while acetaldehyde is detected from the vinyl alcohol/vinyl amine copolymer which is obtained by a known method, it is not substantially detected in the method of the present invention, is not clearly understood. However, the following reason is conceivable.

Namely, as described above, the vinyl alcohol/vinyl amine copolymer is obtained by copolymerizing a vinyl carboxylate such as vinyl acetate with an N-vinyl carboxyamide such as N-vinyl formamide, saponyfying ester groups originated from the vinyl carboxylate in the obtained vinyl carboxylate/N-vinyl carboxyamide copolymer to obtain the vinyl alcohol/N-vinyl carboxyamide copolymer, and then, hydrolyzing amide groups originated from the vinyl amide of this polymer. However, an unreacted vinyl carboxylate tends to remain in the initial copolymerization. If this unreacted vinyl carboxylate is saponified, it becomes vinyl alcohol. But, this vinyl alcohol immediately transforms to acetaldehyde by keto-enol tautomerism. It is considered that if the method of JP-A-62-74902 or JP-A-2000-219706 is employed as a known method for producing the vinyl alcohol/vinyl amine copolymer, it is not possible to prevent generation of a large amount of acetaldehyde, and if the method of JP-B-6-51741 is employed, the vinyl alcohol/vinyl formamide copolymer is hydrolyzed in a solvent wherein particles of the vinyl alcohol/vinyl amine copolymer are not substantially dissolved, and acetaldehyde which is formed in the previous step is eluted and detected as an odor at the time of dissolving the vinyl alcohol/vinyl amine copolymer in water. Further, it is known that acetaldehyde is easily reacted with an amine, and it is accordingly possible that acetaldehyde is reacted with an amino group of the vinyl alcohol/vinyl amine copolymer to form an imine and, if this vinyl alcohol/vinyl amine copolymer is dissolved in water, acetaldehyde will be regenerated by a reverse reaction to generate the odor.

On the other hand, it is considered that in the present invention, the amount of acetaldehyde to be generated is reduced, and the vinyl alcohol/vinyl amine copolymer precipitates as powder after hydrolysis, whereby acetaldehyde remains in an aqueous medium, so that the amount of acetaldehyde in the vinyl alcohol/vinyl amine copolymer aqueous solution can be reduced to such an extent that its odor is not sensed.

Such an amine-functional copolymer of the present invention can be used as a cosmetic substrate for a cosmetic for hair such as a shampoo, a rinse, a treatment, an aerosol hair spray, a pump type hair spray, a hair foam, a gel, a hair wax or a hair cream, or for a deodorant for body such as a perspiration deodorant, by adding other additives, etc. which are commonly used for cosmetics.

To the cosmetic substrate, other optional components may be blended, as the case requires, within a range not to affect the effect of the present invention.

As such optional components, the following examples may be mentioned. A hydrocarbon such as liquid paraffin, vaseline, solid paraffin or squalane; an ester oil such as decyl oleate or isopropyl myristate; a silicone such as an evaporative silicone oil, a silicone resin, a silicone gum or an alkyl-modified silicone; an alcohol such as ethanol, cetyl alcohol, oleyl alcohol, lanolin alcohol, cholesterol, phytosterol or isostearyl alcohol; a higher fatty acid such as lauric acid, miristic acid, palmitic acid, stearic acid, lanolin fatty acid or isostearic acid, or its derivative; a polymer compound such as an acrylic resin alkanol amine solution, polyvinyl pyrrolidone, a vinylcarboxylate polymer, a polyvinyl alcohol, a (N-methacryoyloxyethyl N, N-dimethylammonium-α-N-methylcarboxy betaine)/alkyl methacrylate copolymer or hydroxyethyl cellulose; a surfactant such as lauryl sulfate, lauryl dimethylamino acetate betaine, an alkyltrimethylammonium chloride, polyoxyethylene hardened castor oil, glyceryl monostearate, sorbitan monopalmitate, polyoxyethylene cetyl ether or polyoxyethylene sorbitan monolaurate; a chelating agent such as sodium edetate; an UV absorber; a humectant such as (poly)ethylene glycol, (poly)propylene glycol, glycerol, 1,3-butylene glycol, maltitol, sorbitol, hyaluronic acid, d1-pyrrolidone carboxylate or short chain soluble collagen; an antibacterial agent such as hinokitiol, hexachlorophene, benzalkonium chloride, trichlorocarbanilide or pityonol; a refrigerant such as a menthol; a vitamin such as vitamin A, B, C, D or E; an antiseptic; a plant extract; a pH adjustor such as citric acid, lactic acid, hydrochloric acid or triethanolamine; in the case of an aerosol product, a pressurizing agent such as a liquefied petroleum gas or dimethyl ether; an antioxidant; a hydrotrope agent; a pigment; a perfume; etc.

The polymer of the present invention may preferably be employed also for a gas barrier material.

As a significant characteristic of a film made of polyvinyl alcohol, it may be mentioned that the gas permeability against oxygen, carbon dioxide, nitrogen or the like, is very low. This material may be formed into a strong film containing no plasticizer and having low hydroscopicity and resiliency, by biaxial orientation treatment. It may be used as a film for packaging food in order to improve the storage stability of food. Further, because of such characteristics that its ability to preserve an aromatic component or to prevent sublimation of a sublimable material is high, it is excellent in oil and fat resistance, or chemical resistance, and it is excellent in releasability at a time of FRP or FRA molding, it is expanding in markets of various fields in addition to food packaging ("New·Application and Market of Water-soluble Polymer" Shinzi Nagatomo, published by CMC, 1998, Page 260).

Further, a crosslinking agent may be employed in order to reduce the gas permeability and improve the strength.

As such a crosslinking agent, an organic crosslinking agent having an aldehyde group, a methylol group, a vinyl group, an epoxy group, an ester group, an isocyanate group or the like or an inorganic crosslinking agent such as boric acid or borax, may be mentioned. ("Poval" revised new edition, co-authored by Kouichi Nagano, Saburou Yamane and Kentarou Toyosima, Polymer Publication, P257 1981) (PCT Int. Appl. WO 9804411 edition acta). Such a crosslinking agent reacts with hydroxyl groups in a polymer. However, in the present invention, amino groups in the copolymer have higher reactivity than hydroxyl groups, whereby the same effect can be obtained by a smaller amount of the same crosslinking agent or by treatment at a lower temperature, such being preferable.

Further, JP-B-4-79377 discloses a water resistance composition comprising a water soluble modified polyvinyl alcohol having from 0.05 to 20 mol% of a vinylamine structural unit and from 0.5 to 50 parts by weight, per 100 parts by weight of the polyvinyl alcohol, of a water resistance-imparting agent which reacts with a primary amino group in the polyvinyl alcohol. Also for such an object requiring water resistance, the copolymer of the present invention may preferably be employed.

The copolymer of the present invention has little coloration and contains little odorous component originated from acetaldehyde, whereby it may preferably be employed for a film for packaging food and also for a film for preserving an aromatic component.

Further, as a coating agent for an inkjet photo paper, the copolymer of the present invention may be employed in the same manner as a usual polyvinyl alcohol or modified polyvinyl alcohol. For example, in the same manner as disclosed in JP-B-7-57553 and JP-2750433, an inkjet photo paper may be produced by coating an aqueous solution of the vinyl alcohol/vinylamine copolymer as it is or in the form of a dispersion as mixed with a filler such as silica, alumina or titanium oxide, on a substrate such as paper, polyolefin or polyethylene terephthalate, followed by drying. At that time, in order to improve the water resistance, to reinforce the paper strength, to improve the light resistance or to improve the gas resistance, of the photo paper, an additive may be employed. As a water resistance improving agent and a paper strength reinforcing agent, a crosslinking agent such as glyoxal or boric acid, may be mentioned. As a light resistance improving agent, an UV absorber such as 2-hydroxy benzophenone or 2-(2-hydroxyphenyl)benzotriazole, a hindered amine such as 1,1,6,6-tetramethylpiperidine, or a singlet oxygen optical quenching agent such as diazabicyclooctane, may be mentioned. As a gas resistance improving agent, an antioxidant such as 2,6-di-tert-butyl phenol, or a singlet oxygen optical quenching agent such as diazabicyclooctane may be mentioned.

A water-soluble dye to be used for inkjet recording is usually anionic, and it is accordingly particularly preferred to employ the vinyl alcohol/vinylamine copolymer for the photo paper, since its amine groups will react with the anion groups of the dye to improve fixing ability of the dye.

The copolymer of the present invention has little odor and thus has no substantial problem with respect to working environment. Further, it is preferred that it does not require a special additive in its application where coloration is little.

### EXAMPLES

Now, the present invention will be described with reference to Examples and Comparative Examples, but the present invention is by no means restricted by these Examples.

### (1) Analysis and Evaluation methods

### 1. Hydrolyzed Rate of amide group moieties

On the NMR chart obtained by measuring a heavy aqueous solution of the obtained vinyl alcohol/vinylamine copolymer by ¹H-NMR, it was obtained by an integral ratio of proton originated from an formyl group and methane proton of the main chain.

### 2. Hue

As described in the description

### 3. Content of acetaldehyde

As described in the description

### 4. Whiteness of inkjet photo paper

A 10 wt% aqueous solution of the copolymer was coated on a video printer paper, manufactured by Panasonic, by a #28 bar coater and dried at 100°C for 3 minutes to obtain an inkjet photo paper. The whiteness of the thus obtained inkjet photo paper was measured in accordance with ASTM E313. The measuring apparatus was Model 1001DP, manufactured by NIPPON DENSHOKU, Illuminant was D65, and observer was 10°. Of the specimen, X=94.4, Y=92.5, Z=100.2, x=0.3222 and y=0.3288. The higher the whiteness, the less the coloration.

### 5. Odor of cosmetic material

0.7 g of the hair cosmetic which was prepared in any one of Examples and Comparative Examples was applied to a bun, of 10 cm in length and 2 g in weight and naturally-dried for 2 hours. Then, sensuality evaluation was carried out by five persons on the basis of 5 scale standards such that 5 point is given to no odor sample and 1 point is given to a strong odor sample. An average value was calculated with respect to each sample and taken as an odor value.

### 6. Oxygen permeability

A 10 wt% aqueous solution of the copolymer was coated on a PET film (manufactured by MITUBISHI POLYESTER FILM CORPORATION, 25 µm) by a #6 bar coater and then dried at 100°C for 1 hour to obtain a film. The oxygen permeability of the film thus obtained was measured in accordance with ASTM D-3985.

### (2) Preparation Example (preparation of vinyl alcohol/N-vinylformamide copolymer)

Air in a four-necked flask equipped with a reflux condenser, a nitrogen inlet and a dropping funnel was replaced with nitrogen, and then, 590 g of methanol and 1772 g of vinyl acetate (manufactured by THE NIPPON SYSNTHETIC CHEMICAL INDUSTRY CO.,LTD.) were charged, whereupon heating was started with stirring, while further supplying nitrogen at a flow rate of 50 mL/min. After the temperature reached 58°C, while maintaining the temperature, 100 g of a methanol solution containing 2.0 g of 2,2'-azobis(2,4-dimethyl valeronitrile) (V-65, manufactured by Wako Pure Chemical Industries, Ltd.) was added. A mixed solution comprising 670 g of methanol and 200 g of N-vinyl formamide (manufactured by Dia-Nitrix CO., Ltd.) was gradually dropwise added thereto over a period of 4.5 hours. A solution of 10.5 g of 2,2'-azobis (2,4-dimethyl valeronitrile) in 515 g of methanol was added in five divided portions, and the polymerization reaction was carried out for a total of 10 hours.

The reaction mixture was cooled to room temperature, and 2770 g of methanol was added to the reaction mixture. Then, an H type dehydration tube was installed between the reflux condenser and the flask and reflux was carried out again in order to remove unreacted vinyl acetate. Namely, the unreacted vinyl acetate monomer was removed from the flask by repeating adding methanol to the flask while removing the same amount of methanol containing unreacted vinyl acetate from the bottom of the H type reflux condenser tube. When each of the methanol containing vinyl acetate removed and the methanol added to the flask, reached 6300 g, the operation was terminated, and the reaction mixture was cooled to 40°C.

Then, a solution of 34.8 g of potassium hydroxide in 313 g of methanol, was gradually added. As the saponification reaction progressed, the product precipitated, and the reaction system became a slurry state. After adding the potassium hydroxide solution, the mixture was stirred for 30 minutes, and heated and refluxed for 1 hour. The reaction mixture was cooled to room temperature, the precipitated product was filtered and washed 3 times with 2500 g of methanol to obtain 2483 g of a vinyl alcohol/vinyl formamide copolymer in a wet cake state. 1000 g of the obtained composition was weighed and vacuum-dried for 8 hours at 60°C to obtain 395 g of a solid vinyl alcohol/vinyl formamide copolymer. Its liquid content was 4.1%, and the ratio of a vinyl alcohol unit to a vinyl formamide unit was 88:12 in mol ratio.

### (3) Production and Evaluation of Vinyl Alcohol/Vinyl Amine Copolymer

### EXAMPLE 1

A saline solution having 112 g of sodium chloride dissolved in 362 g of water, was charged into a 1 L kneader provided with a reflux condenser tube and a nitrogen inlet, and 84 g of the vinyl alcohol/vinyl formamide copolymer after drying, obtained by the above Preparation Example, was added, followed by stirring at room temperature for 1 hour. After the reaction mixture became a uniform paste state, 60 g of a 48% sodium hydroxide solution was added, followed by stirring at room temperature for 30 minutes and at 80°C for 30 minutes. After cooling to room temperature, the obtained slurry state product was filtered by a suction funnel. This was thoroughly washed with methanol and dried by a vacuum drier maintained at 60°C for 8 hours, to obtain a vinyl alcohol/vinyl amine copolymer in a yield of 92.5%. The hydrolytic reaction rate was 100%.
The color of a 10 wt% aqueous solution of this polymer, the amount of acetaldehyde and the color of a produced inkjet photo paper were evaluated. The results are shown in Table 1.

### EXAMPLE 2

The operation was carried out in the same manner as in Example 1 except that 128 g of sodium formate was used instead of 112 g of sodium chloride, whereby a vinyl alcohol/vinyl amine copolymer was obtained in a yield of 91%. The hydrolytic reaction rate was 100%.

The evaluation results of the obtained copolymer are summarized in Table 1.

### EXAMPLE 3

84 g of the vinyl alcohol/vinyl amine copolymer after drying, obtained by the Preparation Example, and 356 g of the saline solution obtained after separation of the vinyl alcohol/vinyl amine copolymer which was obtained in Example 2, were charged into a 1 L kneader provided with a reflux condenser and a nitrogen inlet, and further 80 g of water and 54 g of sodium chloride were added, followed by stirring at room temperature for 1 hour. Then, in the same manner as Example 1, a sodium hydroxide solution was added, and the reaction was carried out to obtain a vinyl alcohol/vinyl amine copolymer in a yield of 90.5%. The hydrolytic reaction rate was 100%.

The evaluation results of the obtained copolymer are summarized in Table 1.

### EXAMPLE 4

A saline solution having 84 g of sodium acetate dissolved in 252 g of water, was charged into a 1 L kneader provided with a reflux condenser and a nitrogen inlet, and 84 g of vinyl alcohol/vinyl amine copolymer after drying, obtained by Preparation Example 1, was added, followed by stirring at room temperature for 1 hour. After the reaction product became a uniform paste state, 45 g of a 48% sodium hydroxide aqueous solution was added and stirred at room temperature for 30 minutes and at 60°C for 120 minutes. After cooling to room temperature, the obtained slurry state product was filtered by a suction funnel. This was thoroughly washed with methanol and dried by a vacuum drier maintained at 60°C to obtain a vinyl alcohol/vinyl amine copolymer in a yield of 94.5%. The hydrolytic reaction rate was 100%.

The evaluation results of the obtained copolymer are summarized in Table 1.

### EXAMPLE 5

A saline solution having 30 g of sodium acetate dissolved in 225 g of an aqueous solution obtained after separation of the vinyl alcohol/vinyl amine copolymer in Example 4 and 90 g of water, was charged into a 1 L kneader provided with a reflux condenser and a nitrogen inlet, and 84 g of the vinyl alcohol/vinyl amine copolymer after drying, obtained by the Preparation Example, was added, followed by stirring at room temperature for 1 hour. After the reaction product became a uniform paste state, 37 g of a 48% sodium hydroxide aqueous solution was added, followed by stirring at room temperature for 30 minutes and at 60°C for 120 minutes. After cooling to room temperature, the obtained slurry state product was filtered by a suction funnel. This was thoroughly washed with methanol and dried by a vacuum drier maintained at 60°C to obtain a vinyl alcohol/vinyl amine copolymer in a yield of 94.0%. The hydrolytic reaction rate was 100%.

The evaluation results of the obtained copolymer are summarized in Table 1.

### EXAMPLE 6

A saline solution having 58 g of sodium formate dissolved in 175 g of water, was charged into a 1 L kneader provided with a reflux condenser and a nitrogen inlet, and 100 g of the vinyl alcohol/vinyl amine copolymer after drying, obtained by the Preparation Example, was added, followed by stirring at room temperature for 1 hour. After the reaction product became a uniform paste state, 82 g of a 48% sodium hydroxide solution was added and stirred at room temperature for 30 minutes and at 70°C for 120 minutes. After cooling to room temperature, the obtained slurry state product was filtered by a suction funnel. This was thoroughly washed with methanol and dried by a vacuum drier maintained at 60°C to obtain a vinyl alcohol/vinyl amine copolymer in a yield of 94.8%. The hydrolytic reaction rate was 100%.

The evaluation results of the obtained copolymer are summarized in Table 1.

### COMPARATIVE EXAMPLE 1

The operation was carried out in the same manner as in Example 1 except that sodium chloride was not added. The reacted product became a paste state and a formed vinyl alcohol/vinyl amine copolymer could not be obtained by filtration by a suction funnel.

### COMPARATIVE EXAMPLE 2

The stirring was carried out in the same manner as in Example 1 except that 245 g of the vinyl alcohol/vinyl amine copolymer in a wet cake state, 270 g of water and 128 g of sodium chloride were used instead of 84 g of the vinyl alcohol/vinyl amine copolymer after drying, 362 g of water and 112 g of sodium chloride. 209.8 g of a 48% sodium hydroxide aqueous solution was added to the reaction mixture, and then the reaction was carried out in the same manner as Example 1. The reaction product became a paste state and a formed vinyl alcohol/vinyl amine copolymer could not be obtained by filtration by a suction funnel.

### COMPARATIVE EXAMPLE 3

The operation was carried out in the same manner as in Example 1 except that sodium chloride was not added, 362 g of methanol was used instead of 362 g of water, and the stirring time was 2 hours to obtain a vinyl alcohol/vinyl amine copolymer in a yield of 73%. The hydrolytic reaction rate was 92%.

The evaluation results of the obtained copolymer are summarized in Table .

**TABLE 1**

| | Hue (Gardner color standards) | Acetaldehyde content (µg/mL) | Whiteness |
|---|---|---|---|
| Ex. 1 | 2 | 0.0 | 89.6 |
| Ex. 2 | 2 | 0.0 | 89.7 |
| Ex. 3 | 2 | 0.0 | 89.6 |
| Ex. 4 | 2 | 0.0 | 89.6 |
| Ex. 5 | 2 | 0.0 | 89.7 |
| Ex. 6 | 2 | 0.0 | 89.6 |
| Comp. Ex. 3 | 4 | 2.7 | 88.7 |

### (4) Production and Evaluation of Cosmetic Material EXAMPLES 7 and 8, and COMPARATIVE EXAMPLE 4 (Pump spray)

A mixture comprising 2 parts by weight of the copolymer obtained in one of Examples and Comparative Examples, 30 parts by weight of ethanol and 68 parts by weight of purified water, which was adjusted to pH 7 by hydrochloric acid, was used as a test sample, and the odor was evaluated. The results are shown in Table 2.

### EXAMPLE 9 and COMPARATIVE EXAMPLE 5 (Hair foam)

2.5 parts by weight of the copolymer obtained in one of Examples and Comparative Examples, 1.0 part by weight of a hydrogenated castor oil, PEG-40, and 96.5 parts by weight of purified water, were mixed and adjusted to pH7 by means of citric acid. 8.0 parts by weight of LPG was added to this mixture to obtain a composition for hair foam. The odor was evaluated. The results are summarized in Table 2.

**TABLE 2**

| | Ex. 7 | Ex. 8 | Ex. 9 | Comp. Ex. 4 | Comp. Ex. 5 |
|---|---|---|---|---|---|
| Odor of cosmetic material | 4.8 | 4.6 | 4.0 | 2.4 | 1.6 |

### (5) Gas barrier film

### EXAMPLE 10

With respect to a film made of the copolymer obtained in Example 4, the oxygen permeability was measured in accordance with the above-mentioned procedure whereby the permeability was 6.65×10⁻¹⁵cm³·cm/cm²·s·Pa

### COMPARATIVE EXAMPLE 6

The oxygen permeability of a PET film used in Example 10 alone was measured, whereby the permeability was 3.29×10⁻¹²cm³·cm/cm²·s·Pa.

### INDUSTRIAL APPLICIABILITY

According to the present invention, it is possible to obtain an amine functional copolymer improved in color and odor, easily and in high yield, by efficiently hydrolyzing a vinyl alcohol/N-vinyl carboxamide to obtain the desired amine-functional copolymer. This copolymer may preferably be used for a cosmetic material, an inkjet photo paper coating agent or a gas barrier material.

## Claims

1. A copolymer which is an amine-functional copolymer, **characterized in that** its 10 wt% aqueous solution has a Gardener index of at most 3 as measured in accordance with ASTM D1544.

2. A copolymer which is an amine-functional copolymer, **characterized in that** the amount of acetaldehyde in a sample of head space gas collected from its 10 wt% aqueous solution by a solid phase micro extraction method at 60°C for 120 minutes in an air atmosphere, is less than 2 µg/mL.

3. The copolymer according to Claim 1 or 2, wherein the amine-functional copolymer is a vinyl alcohol/vinyl amine copolymer comprising repeating units represented by the formulae (I) and (II):

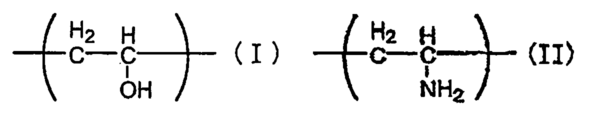

4. The copolymer according to Claim 3, wherein the content ratio of the vinyl alcohol unit (I) to the vinyl amine unit (II) in the vinyl alcohol/vinyl amine copolymer is (I):(II)=99:1 to 50:50 (mol ratio).

5. A method for producing an amine-functional copolymer, which comprises hydrolyzing an N-vinylcarboxamide copolymer in the presence of an acid or base catalyst, **characterized in that** the hydrolysis is carried out in an aqueous medium having a salt dissolved therein.

6. A method for producing the copolymer as defined in any one of Claims 1 to 4, which comprises hydrolyzing an N-vinylcarboxamide copolymer in an aqueous medium having a salt dissolved therein, in the presence of an acid or base catalyst.

7. The method for producing the copolymer according to Claims 5 or 6, wherein the N-vinylcarboxamide copolymer is a vinyl alcohol/N-vinylcarboxamide copolymer comprising repeating units represented by the formulae (I) and (III): 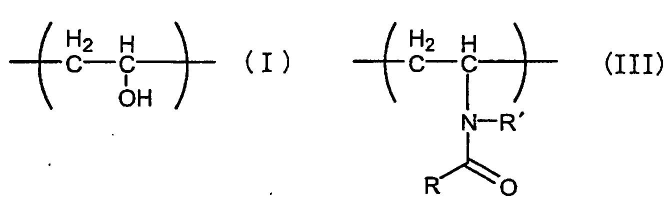 (In the formula (III), each of R and R' independently represents a hydrogen atom, an alkyl group or an aryl group.)

8. The method for producing the copolymer according to any one of Claims 5 to 7, wherein the hydrolysis is carried out under such a condition that the formed amine-functional copolymer precipitates as solid.

9. The method for producing the copolymer according to Claims 7 or 8, wherein the vinyl alcohol/N-vinylcarboxamide copolymer is one obtained by hydrolyzing a vinyl carboxylate/N-vinylcarboxamide copolymer in an organic solvent.

10. The method for producing the copolymer according to any one of Claims 5 to 9, wherein the cation of the salt is an alkali metal ion.

11. The method for producing the copolymer according to any one of Claims 5 to 10, wherein the salt is one selected from the group consisting of sodium chloride, potassium chloride, sodium formate, potassium formate, sodium acetate and potassium acetate.

12. The method for producing the copolymer according to any one of Claims 5 to 11, wherein the concentration of the salt in the aqueous medium is at least 1 wt%.

13. The method for producing the copolymer according to any one of Claims 5 to 12, wherein the aqueous medium having a salt dissolved therein is a solution obtained after solid-liquid extraction of the amine-functional copolymer precipitated from the reaction mixture.

14. A cosmetic material comprising the copolymer as defined in any one of Claims 1 to 4.

15. A gas barrier material comprising the copolymer as defined in any one of Claims 1 to 4.

16. A coating agent for an inkjet photo paper comprising the copolymer as defined in any one of Claims 1 to 4.
